# EUROPEAN PATENT APPLICATION

(11) **EP 1 484 688 A1**
(43) Date of publication of application: **08.12.2004**
(21) Application number: 02700745.9
(22) Date of filing: 25.02.2002
(51) Int. Cl.: G06F 13/00, H04M 1/00, H04M 1/57

(54) **INFORMATION DEVICE CONTROLLER, INFORMATION DEVICE, METHOD, AND PROGRAM**

(71) Applicant: FUJITSU LIMITED, Kawasaki-shi, Kanagawa 211-8588 (JP)
(72) Inventor: TAKEDA, Kazuhiro, c/o FUJITSU LIMITED, Kawasaki-shi, Kanagawa 211-8588 (JP); ISHIDERA, Nobutaka, c/o FUJITSU PERS COMP Syst Ltd, Inagi-shi, Tokyo 206-0801 (JP)
(74) Representative: Stebbing, Timothy Charles
(86) International application number: PCT/JP2002/001660
(87) International publication number: WO 2003/071433

(57) **Abstract**

A control system for controlling an information device performing communications via a network, includes a detection unit for detecting an arrival of information from the information device performing the communications via the network, a recording unit for recording a category of the information reached via the network and a mode of an arrival notification associated with this category, a driving unit for driving an output device for notifying of the arrival when the arrival is detected, corresponding to the mode, and a control unit for controlling, when a plurality of arrivals are detected, the driving unit in a predetermined procedure.

## Description

### Technical Field

The present invention relates to an arrival function in communications of electronic mails, telephones and so on.

### Background Arts

Nowadays, the information is frequently communicated by utilizing E-mails through on information devices such as personal computers, cellular phones, PHSs (Personal Handyphone Systems), PDAs (Personal Digital (Data) Assistants) and so on. Each of these information devices is provided with an arrival notifying function of notifying a user of an arrival of the E-mail as soon as possible. Further, an absent-time arrival notifying function in the communications on general fixed telephones and cellular phones is provided for supporting the modern people who are pressed by time.

Then, there is provided a function of getting a user to intuitively recognize a sender of the E-mail, a call originator of a telephone, a degree of importance of the E-mail also in a conventional arrival notifying function of notifying of the E-mail and the telephone call. For example, a color of illumination via a backlight of a liquid crystal, etc. serving as a sub-display device attached to the information device, a color of illumination via a backlight of a mobile terminal such as a cellular phone, etc., or a color of a lamp of the mobile terminal, are switched over in association with the mail sender or the call originator and with the degree of importance of the information. (E.g., Japanese Patent Application Laid-Open Publication No.2001-101096, Japanese Patent Application Laid-Open Publication No.11-220524, Japanese Patent Application Laid-Open Publication No. 10-257089, Japanese Patent Application Laid-Open Publication No. 2000-358086 and Japanese Patent Application Laid-Open Publication No.10-126827).

The users predefines such that the senders are associated with colors such as setting Mr. or Mrs. or Miss A ("Mr." will hereinafter be used as an address term for convenience's sake) in red, Mr. B in blue, and so on. Owing to these predefinitions, when the E-mails sent from the individual senders are reached, the operation goes as follows;
- the color of illumination via the backlight of a liquid crystal panel becomes red upon an arrival of the E-mail from Mr. A; and
- the color of the illumination via the backlight of the liquid crystal panel becomes blue upon an arrival of the E-mail from Mr. B. Even when opening the E-mail, the user is therefore able to recognize whom the E-mail is reached from.

### Disclosure of the Invention

A conventional system, however, was not sufficient of contrivance for a case in which mails are reached from a plurality of persons. The conventional system was further insufficient of contrivance for such a case that a plurality of receipts are treated absent and recorded as absent-time receipts because of being unable to answer within a predetermined period of time when telephone calls are received. In the majority of those cases, the user is notified of the arrival from the sender given the highest priority. Namely, there is illuminated only the color via the backlight of the liquid crystal panel or only the lamp color, which are associated with the arrival from the sender given the highest priority.

For example, in a single check of the received mails in the examples given above, if the E-mails are simultaneously reached from Mr. A and Mr. B and if the first priority is set to Mr. A and the second priority is set to Mr. B as notifying priorities, the operation goes as follows:
- the E-mails are reached from Mr. A and Mr. B with the result that the red color is illuminated via the backlight of the liquid crystal panel, and the user is notified of only the arrival from Mr. A. This is the same as a case in which the E-mail arrives from only Mr. A. Namely, the user was unable to recognize that the E-mail was reached also from Mr. B.

The present invention was devised in view of the problems inherent in the prior art described above. It is therefore an object of the present invention to provide a function of intuitively notifying, when there are plurality of arrivals, a user of every sender and category of the information arrived.

The present invention adopts the following features in order to solve the problems described above. To be specific, the present invention is a control system controlling an information device performing communications via a network, including a detection unit for detecting an arrival of information from the information device performing communications via a network, a recording unit recording a category of the information and a mode of an arrival notification associated with this category, a driving unit driving an output device notifying of the arrival of the information, corresponding to the mode associated with the information category, and a control unit controlling, when the detection unit detects a plurality of arrivals at one detection timing, the driving unit in a predetermined procedure with respect to the plurality of arrivals.

Herein, the information may be categorized based on, for instance, information of identifying an originator (source) of the information. Namely, a source address of the E-mail, a character string (e.g., a domain name) contained in the source address are available as the categories. Further, the information category may be a piece of information of identifying an organization (group) to which the information originator belongs. For example, co-workers, superiors, customers, friends, family members, etc. can be used as the information categories.

Moreover, priorities by which the information originators are grouped may also be used. For example, E-mail addresses of the superiors, the customers and the family members are set as a first priority group. E-mail addresses of the co-workers are set as a second priority group. E-mail addresses of the friends are set as a third priority group.

Further, the information may also be categorized based on, e.g., titles of the E-mails. For instance, the information may be categorized according to titles containing character strings such as "urgent", "emergent" or "answer required", etc. and titles containing none of these character strings.

Still further, the E-mails may be categorized into E-mails requesting a receipt acknowledgment mail when received and E-mails other than those. If possible of designating "urgent", "ordinary", etc. by way of a priority of sending the E-mail, the information may be categorized according to these designations.

Preferably, in the control system of the information device, a priority may be set in the category of the information, and the control unit may determine a notifying sequence of notifying of the plurality of arrivals on the basis of the priority, and may control the driving unit.

Preferably, in the control system of the information device, the control unit may determine the notifying sequence of notifying of the plurality of arrivals on the basis of the sequence of the plurality of arrivals, and may control the driving unit.

Further, the present invention is an information device performing communications via a network, including a detection unit detecting an arrival of information via a network, a recording unit recording a category of the information and a mode of an arrival notification associated with this category, an output device notifying of the information arrival, a driving unit driving the output device, corresponding to the category of the arrived information, and a control unit controlling, when the detection unit detects a plurality of arrivals at one detection timing, the driving unit in a predetermined procedure with respect to the plurality of arrivals.

The control unit gets the driving unit to sequentially drive the output device. Accordingly, when plural pieces of information are reached, the output device is driven sequentially corresponding to the category of each piece of information arrived, and a user of the information device is therefore able to intuitively recognize the information category from an output of the output device. Herein, the information category connotes, for example, information of identifying an originator (source) of the information, information of indicating a degree of importance of the information, and so forth.

The present invention may further be a method of actualizing any one of the processes described above. The present invention may still further be a program for making a computer actualize any one of the functions described above. The present invention may yet further be a readable-by-computer recording medium recorded with such a program.

### Brief Description of the Drawings

FIG. 1 is a diagram of a principle of an information device according to a first embodiment of the present invention;
FIG. 2 is a perspective view of the information device, wherein a cover member 3 is closed (folded);
FIG. 3 is a perspective view of the information device, wherein the cover member 3 is opened (expanded);
FIG. 4 is a diagram of a hardware architecture of the information device;
FIG. 5 is a block diagram showing a sub-display unit 5 and an interface unit shown in FIG. 4;
FIG. 6 shows an example of a data structure of a color illuminating information table 55;
FIG. 7 shows an example of a data structure of setting information 53 shown in FIG. 1;
FIG. 8 shows an example of a screen layout of a priority-and-color setting dialog 52;
FIG. 9 shows an example of a screen layout of a user add dialog displayed by pressing an add button in FIG. 8;
FIG. 10 is a flowchart of a processing procedure of illuminating a color of a liquid crystal panel of the sub-display unit 5 in the sequence of a priority of a sender;
FIG. 11 is a flowchart showing a process of a color illuminating module 56 shown in FIG. 1;
FIG. 12 is a flowchart of a processing procedure of illuminating the color of the liquid crystal panel of the sub-display unit 5 in the sequence of mail arrival time;
FIG. 13 is a view of an external configuration of a cellular phone 120 according to a second embodiment of the present invention; and
FIG. 14 is a diagram of a hardware architecture of the cellular phone 120.

### Best Mode for Carrying out the Invention

Preferred embodiments of the present invention will hereinafter be discussed with reference to the drawings.

### <<First Embodiment>>

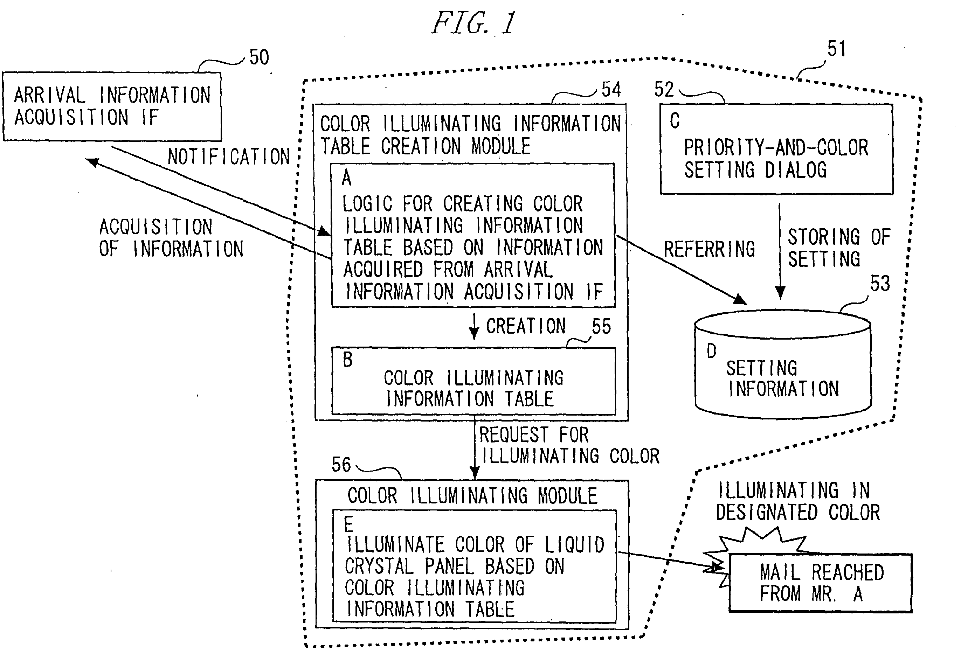

An information device according to a first embodiment of the present invention will hereinafter be described with reference to drawings in FIGS. 1 through 12. Note that the information device is exemplified as a notebook type personal computer.

### <Principle of Notification of Arrivals of Plurality of Mails>

A scheme of the present invention device is that a user is, when a plurality of mails arrive via a network, made to intuitively recognize individual senders through sequential illumination in different colors associated with these senders on a liquid crystal panel. FIG. 1 shows this principle of the information device.

The information device includes an arrival information acquisition interface 50 acquiring, when an E-mail arrives at an unillustrated mail server across the network, a piece of arrival information thereof, and an arrival notifying unit 51 backlighting the liquid crystal panel in a predetermined color on the basis of the arrival information. Both of the arrival information acquisition interface 50 and the arrival notifying unit 51 can be actualized as a program or firmware executed on a computer.

The arrival information acquisition interface 50 is defined as an interface module acquiring the arrival information of the mail from an unillustrated E-mail reading program. The E-mail reading program accesses the unillustrated mail server according to POP (Post Office Protocol) or IMAP (Internet Mail Access Protocol), thus periodically reading the arrived E-mails via the network.

The arrival information acquisition interface 50 is notified of pieces of information such as sender addresses, subjects, etc. of the arriving E-mails at a predetermined interval from the E-mail reading program, and transfers these pieces of information to the arrival notifying unit 51. The arrival information acquisition interface 50 may also be, however, configured integrally with the E-mail reading program. In any case, the E-mail arrival process is broadly known, and hence its explanation is herein omitted.

The arrival notifying unit 51 backlights the liquid crystal panel on the basis of the arrival information transferred from the arrival information acquisition interface 50. As shown in FIG. 1, the arrival notifying unit 51 includes a priority-and-color setting dialog 52, a color illuminating information table creation module 54 and a color illuminating module 56.

The priority-and-color setting dialog 52 sets a priority of the sender of the E-mail received by the user of the information device. Herein, the priority specifies the sequence of notifications when the E-mails sent from the plurality of senders are reached. Further, the priority-and-color setting dialog 52 sets which color the liquid crystal panel is backlighted in, wherein the colors specify the arrivals of the mails from the individual senders. The priorities and the illuminated colors are stored as setting information 53 on a nonvolatile memory.

The color illuminating information table creation module 54 creates, when notified of the arrival of the E-mail, a color illuminating information table 55 on the basis of the priorities and the illuminated colors that have been stored on the setting information 53.

The color illuminating information table 55 is a table in which to designate such a color illuminating sequence that the liquid crystal panel is backlighted in colors. The color illuminating module 56 backlights the liquid crystal panel in colors according to the color illuminating information table 55.

Processes of the arrival notifying unit 51 will hereinafter be outlined according to the following steps 1 through 5.

(Step 1) A user sets beforehand a sender/color pair by operating the priority-and-color setting dialog 52, wherein when an E-mail sent from a preset sender is reached, the liquid crystal panel is backlighted in the preset color associated with this sender. A result of setting is stored on the setting information 53.

(Step 2) When receiving the E-mail, the color illuminating information table creation module 54 is notified of this receipt.

(Step 3) The color illuminating information table creation module 54 acquires arrival information from the E-mail reading program by utilizing the arrival information acquisition interface 50.

(Step 4) The color illuminating information table creation module 54 creates the color illuminating information table 55 on the basis of the arrival information acquired in Step 3 and the setting information 53.

(Step 5) When the creation of the color illuminating information table 55 is completed, information thereof is sent to the color illuminating module 56. The color illuminating module 56 backlights the liquid crystal panel in the preset color on the basis of the information within the color illuminating information table 55.

### <Hardware Architecture>

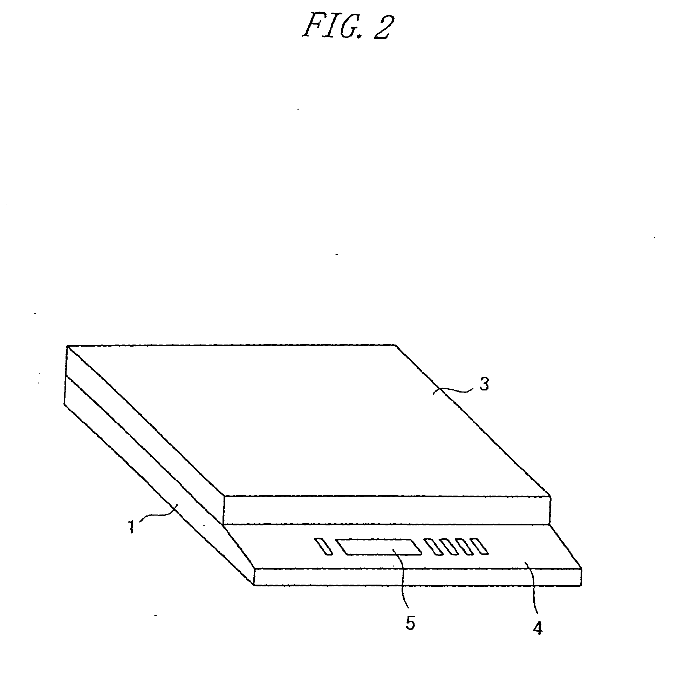

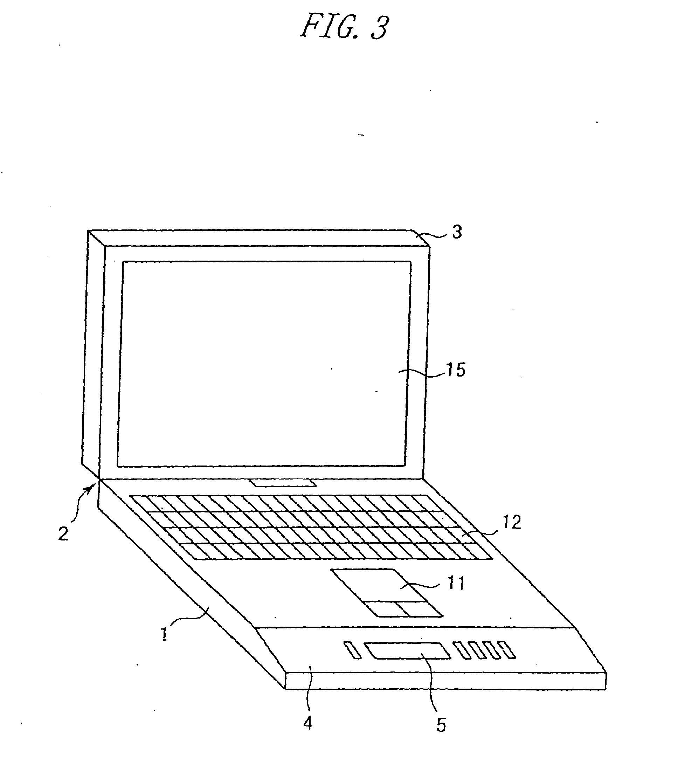

FIG. 2 shows a perspective view of the information device of which a cover member 3 is closed. Further, FIG. 3 shows a perspective view of the information device of which the cover member 3 is opened. As shown in FIGS. 2 and 3, the information device is constructed mainly of a body unit 1 and the cover member 3 attached via a hinge portion 2 to the body unit 1 so as to be turnable open and close about this hinge portion 2. A sub-display unit 5 is provided on a front panel 4 exposed to the outside even in a closed-state of the cover member 3 of the body unit 1. Further, as illustrated in FIG. 3, when the cover member 3 is opened, a pointing device 11, a keyboard 12 and a main display unit 14 appear.

The sub-display unit 5 is effective in being recognized in its display by the user even in the closed-state of the cover member 3. Accordingly, when the cover member 3 is kept close (such as a standby mode, a case of user's closing the cover member 3 during a temporary unused period of the information device, and so on), a variety of statuses are recognizable to the user through the display thereof. Namely, it is preferable that the sub-display unit 5 be in an visible state invariably even in an unused state of the main display unit 15. The sub-display unit 5 is constructed of a liquid crystal panel.

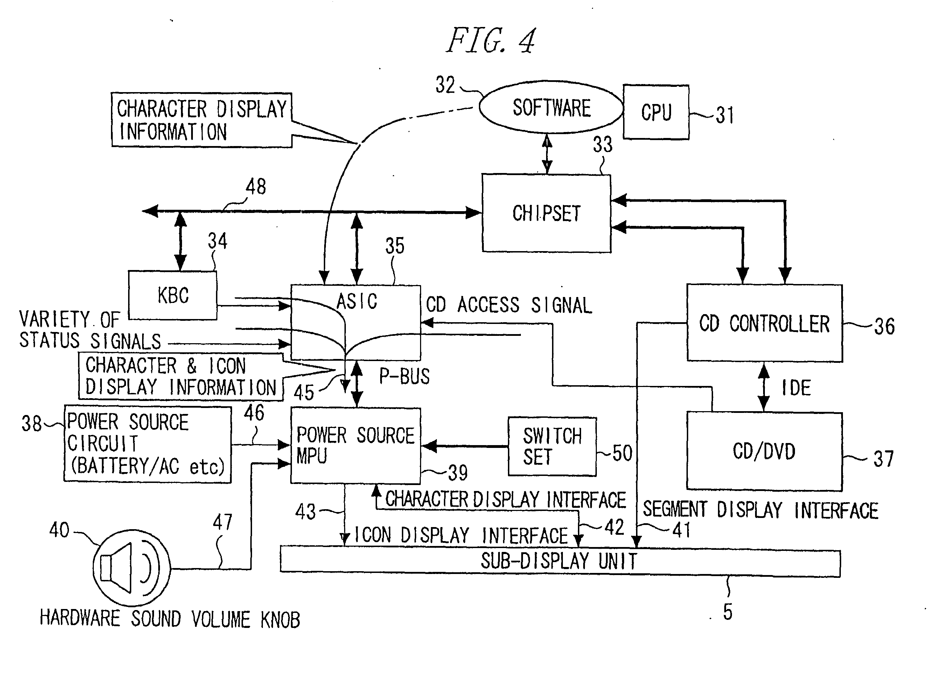

FIG. 4 is a block diagram showing a hardware architecture of the present information device. Connected, as shown in FIG. 4, within the information device are a CPU 31, software 32 executed by the CPU 31, a chipset-unit 33, a keyboard control (KBC) unit 34, an ASIC (Application-Specific Integrated Circuit) register 35, a CD controller 36, a CD/DVD player 37, a power source circuit 38, a power source MPU 39, a hardware sound volume knob 40, a segment display interface 41, a character display interface 42, an icon display interface 43, P-BUS (Peripheral-BUS) interface 45, a power source circuit interface 46, a hardware sound volume interface 47, a high-speed bus 48, a switch set 50 and the sub-display unit 5.

The CPU 31 controls operations of the whole information device and executes the software 32 such as applications, etc.. The software 32 itself is stored on an arbitrary storage medium. The software 32 includes the arrival information acquisition interface 50 and the arrival notifying unit 51 that are shown in FIG. 1.

The chipset unit 33 performs setting of each of the units and the modules within the body unit 1 on the basis of instructions given from the CPU 31. The ASIC register 35 is provided for storing pieces of status information to be displayed on the sub-display unit 5. The ASIC register 35 is stored with, e.g., character display information given from the CPU 31, keyboard status information given from the KBC unit 34, a variety of status signals, CD access signals from the CD/DVD player 37, and so forth. The color illuminating information table creation module 54 of the arrival notifying unit 51 sets the color illuminating information table 55 in the ASIC register 35.

The power source MPU 39 accesses the ASIC register 35 via the P-BUS interface 45, and controls which color the liquid crystal panel of the sub-display unit 5 is backlighted in on the basis of the accessed information. The liquid crystal panel of the sub-display unit 5 will also hereinafter simply be called a liquid crystal panel.

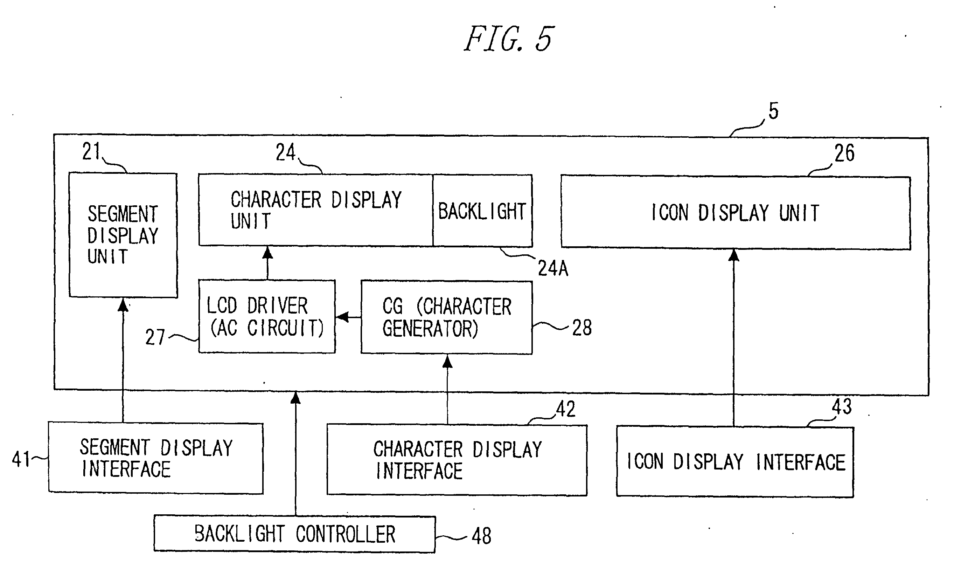

FIG. 5 is a block diagram showing the sub-display unit 5 and the interfaces 41 through 43 shown in FIG. 4. In FIG. 5, a character display unit 24 is provided with a backlight 24A having an arbitrary construction and capable of illuminating in a plurality of colors. Further, the character display interface 42 such as a TTL (Transistor-Transistor) Logic) interface, a CMOS (Complementary Metal-Oxide Semiconductor) interface, etc. involves the use of a parallel or serial data transfer system. The sub-display unit 5 is therefore provided with an LCD driver 27 constructed of an AC circuit and serving to drive the character display unit 24 composed of an LCD, and with a character generator (CG) 28. The character display interface 42 supplied the CG 28 with character display information containing font data.

Moreover, the segment display interface 41 supplies the segment display unit 21 with segment display information such as numerals consisting of an arbitrary number of digits that serve for a direct drive and for display of the segment display unit 21 constructed of an LCD. The icon display interface 43 supplies an icon display unit 26 with various pieces of icon display information that serve for a direct drive and for display of the icon display unit 26 constructed of an LCD.

A backlight controller 48 controls, though the illustration is omitted in FIG. 4, ON/OFF states, a flicker state including control of a flicker interval, the illuminating colors, etc. of a backlight 24A of the character display unit 24 on the basis of the display information given from the power source MPU 39.

Note that the power source MPU 39 and the backlight controller 48 correspond to the color illuminating module 56 in FIG. 1.

### <Data Structure>

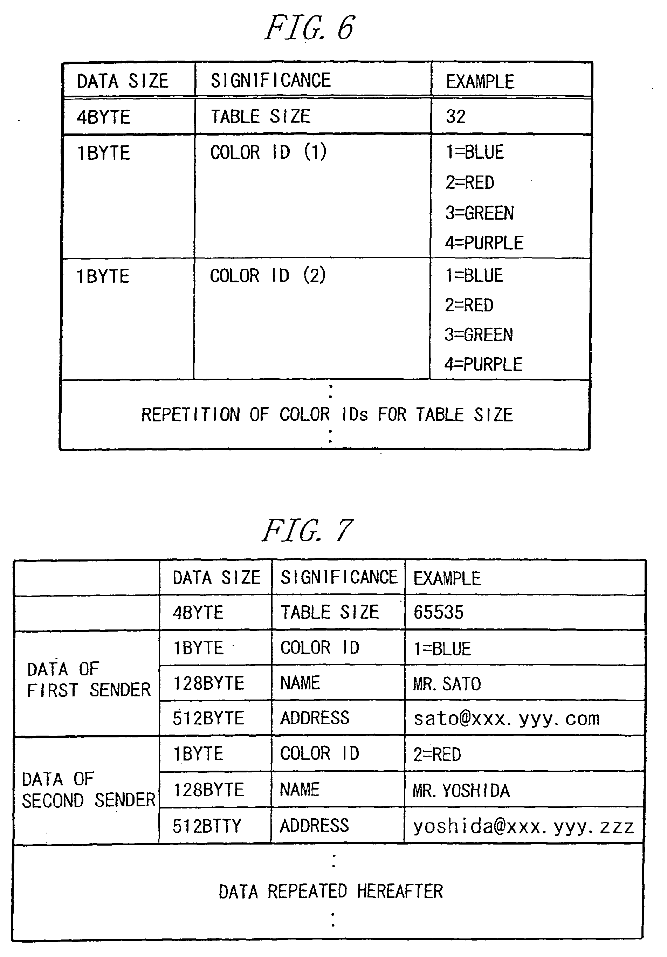

FIG. 6 shows an example of a data structure of the color illuminating information table 55. As shown in FIG. 6, the color illuminating information table 55 is a variable length table consisting of a table size and a color ID suite.

A table size is 4-byte information and designates a data size in byte of the color illuminating information table 55. For example, when the table size is set to 32, the data size of the color illuminating information table 55 becomes 32 bytes.

Further, the color ID suite contains setting of color IDs for the table size. The color ID is defined as 1-byte information and designates a color of the illumination via the backlight. For instance, as defined like this: 1 = Blue, 2 = Red, 3 = Green and 4 = Purple, the color setting is done based on specifications of the ASIC register 35 or the backlight controller 48.

FIG. 7 shows an example of a data structure of the setting information 53 shown in FIG. 1. The setting information 53 has such a structure that a notifying priority of notifying of the arrived E-mail and a color of the illumination via the backlight for the liquid crystal panel (which may also be called a liquid crystal display or an LCD (Liquid Crystal Display)) are set associated with a sender of this E-mail.

The setting information 53 is structured of records of the individual senders of the E-mails. As shown in FIG. 7, each record has a "color ID" field, a "name" field and an "address" field.

Among these fields, the name represents a name of the E-mail sender, and the address represents an E-mail address of the sender. Then, the color ID designates a color of the illumination via the backlight for the liquid crystal panel when the E-mail sent from the very sender is reached.

Moreover, the setting information 53 retains the records in a way that sorts out the records in the sequence of the priority of notifying of the E-mail. Hence, according to the setting in FIG. 7, when E-mails of Mr. Sato and Mr. Yoshida arrive, the present information device notifies at first of the receipt of the E-mail from Mr. Sato by blue illumination via the backlight, and subsequently notifies of the receipt of the E-mail from Mr. Yoshida by red illumination via the backlight.

### <Screen Layout>

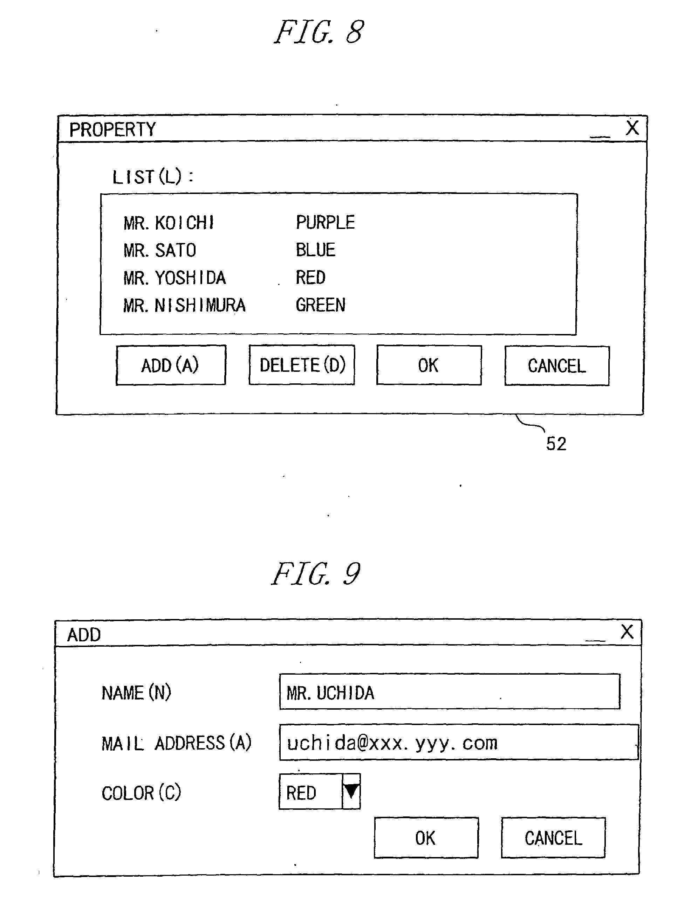

FIG. 8 shows an example of a screen layout of the priority-and-color setting dialog 52. The dialog 52 has a window bar titled "property", a list titled "listing", an "add" button, a "delete" button, an "OK" button and a "cancel" button.

The list displays a sender-to-color association list in which the E-mail senders are associated with the notifying colors. Any one of rows in the list is indicated as a present row. The present row is a row on which a cursor is located at the present and is indicated by a gray background pattern in FIG. 8. The cursor can be scrolled up and down by operating a pointing device 11 or the keyboard 12.

When the user presses the add button, a user add dialog in FIG. 9 opens, wherein information for one sender can be added next (or anterior) to the present row in the list. When the user presses the delete button, the information of the present row selected in the list can be deleted. When pressing the OK button, the present listing contents are registered on the setting information 53, and the dialog closes. When the user presses the cancel button, the dialog closes without storing the present listing contents.

FIG. 9 shows an example of a screen layout of the user add dialog displayed by pressing the add button in FIG. 8. The user add dialog has a window bar titled "add", an input field attached with a label of "name (N)" (which will hereinafter be referred to as a name edit box), an input field attached with a label of "mail address (A)", a selection field attached with a label of "color (C)" (which will hereinafter be termed a color dropdown list box), an "OK" button and a "cancel" button.

A name information (such as a name of the sender) to be added is set in the name edit box. A mail address of this sender is set in the mail address input field. An illuminating color for notifying the user of a receipt of the E-mail from this sender is selected from the color dropdown list box.

When pressing the OK button, the present contents are added to the list, and the dialog closes. When pressing the cancel button, the dialog closes without adding the contents to the list.

### <Operation>

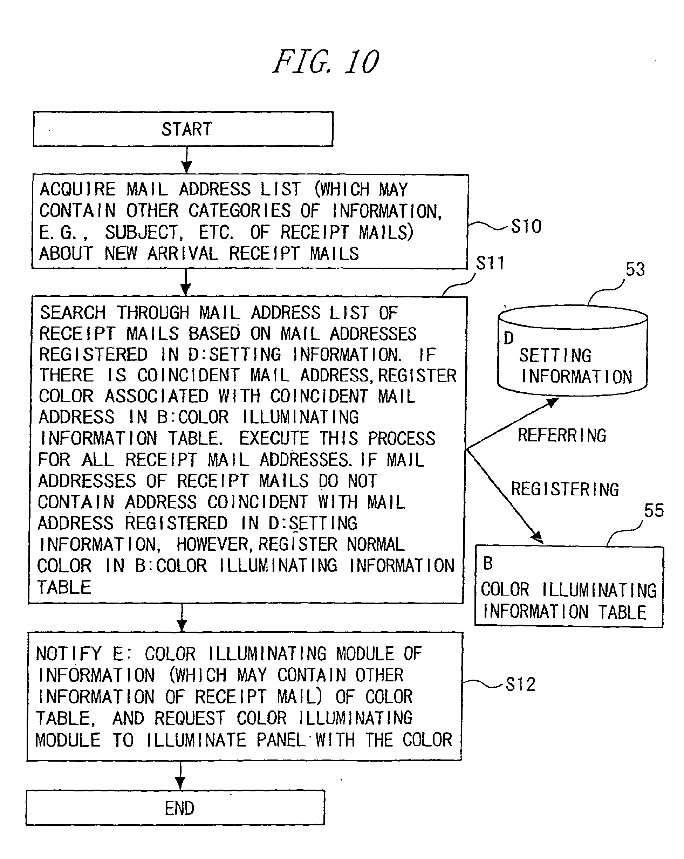

FIG. 10 is a flowchart of processing steps for color-illuminating the liquid crystal panel of the sub-display unit 5 in the sequence of the priorities of the senders. This process is actualized as the color illuminating information table creation module 54 executed by the CPU 31.

In this process, the CPU 31 acquires a mail address list (which may include other categories of information of the receipt mail such as a subject and so on) about newly-arrived receipt mails from the E-mail reading program via the arrival information acquisition interface 50 (S10). The CPU 31 may also, however, set not only the newly-arrived receipt mail but also a not-yet-read E-mail as an acquisition target (S10).

Next, the CPU 31 searches through the mail address list of the receipt mails on the basis of the mail address registered on the setting information 53. Then, if the mail address registered in the setting information 53 is contained in the mail address list of the newly-arrived receipt mails, the CPU 31 registers the color associated with that mail address in the color illuminating information table 55. This process is executed upon all the receipt mail addresses. As a result, if the mail address of the receipt mail is coincident with none of the mail addresses registered on the setting information 53, the CPU 31 registers a normal color in the color illuminating information table 55 (S11).

Then, the CPU 31 notifies the color illuminating module 56 of the information (which may contain other categories of information of the receipt mail) in the color illuminating information table 55, and requests the color illuminating module 56 for the color illumination of the liquid crystal panel (S12).

Thus, the process in FIG. 10 creates the color illuminating information table 55 on the basis of the mail addresses registered on the setting information 53. It is noted that, the setting information 53 is stored with the data in the sequence of the priority of the notifying color (the priority of the sender). Therefore the data stored in the color illuminating information table 55 are sorted out in the sequence of the color priority (the priority of the sender).

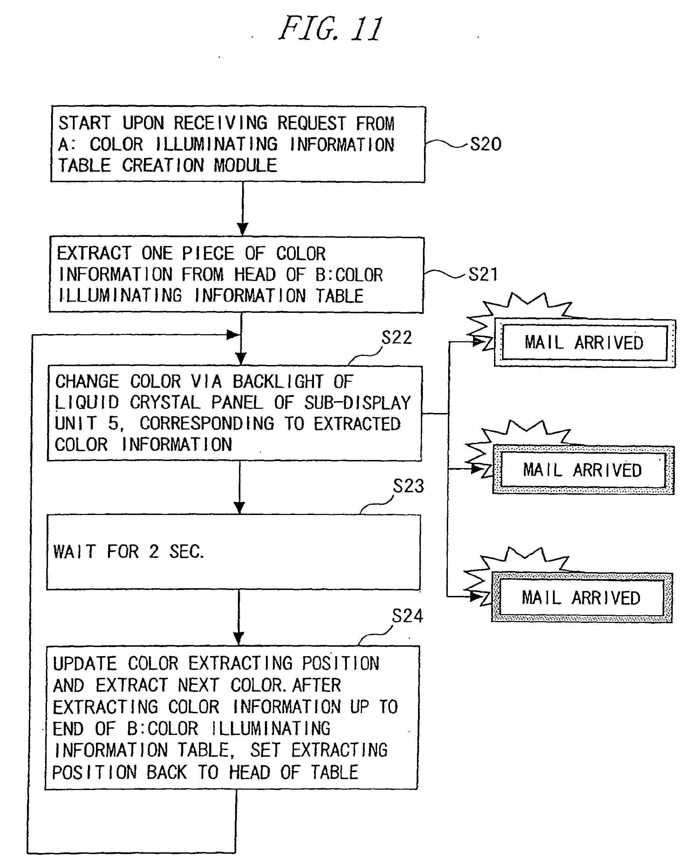

FIG. 11 is a flowchart showing a process of the color illuminating module 56 shown in FIG. 1. This process is started upon receiving a request from the color illuminating information table creation module 54 (S20).

The color illuminating module 56 extracts one piece of color information from the head of the color illuminating information table (S21). Then, the color illuminating module 56 changes a color of the illumination via the backlight of the liquid crystal panel, corresponding to the extracted color information (S22). Next, the color illuminating module 56 waits for a predetermined period (S23). This predetermined period is set to 2 sec in an example of FIG. 11 but is not necessarily limited to 2 sec.

Next, the color illuminating module 56 updates the address (which is the color extracting position) in the color illuminating information table 55, and extracts a next color. Further, when updating the addresses down to the end of the color illuminating information table 55, the color illuminating module 56 brings the address back to the head of the table (S24). Then, the color illuminating module 56 returns the control to S22.

The process in S22 through S24 sequentially switches over the color of the illumination via the liquid crystal panel backlight of the sub-display unit 5 according to the colors defined in the color illuminating information table 55. This process is repeated till the user presses the predetermined stop button.

The user is therefore able to intuitively grasp the senders even when receiving the E-mails from the plurality of senders. Further, according to the first embodiment, the user is informed of the senders in the sequence defined in the setting information 53 and may therefore define the setting information 53 in the sequence of the senders who send important E-mails. This scheme enables the user to receive the notifications in the sequence of the important senders.

### <Modifications of the Color Illuminating Sequence>

In the first embodiment discussed above, the user is notified of the senders of the arrived E-mails in the sequence defined in the setting information 53. The embodiment of the present invention is not, however, limited to this procedure. For example, when receiving a plurality of E-mails through a mail server in a single check to the mail server, the user may also be notified of the plurality of E-mails read from the mail server in the sequence of the receipt time thereof.

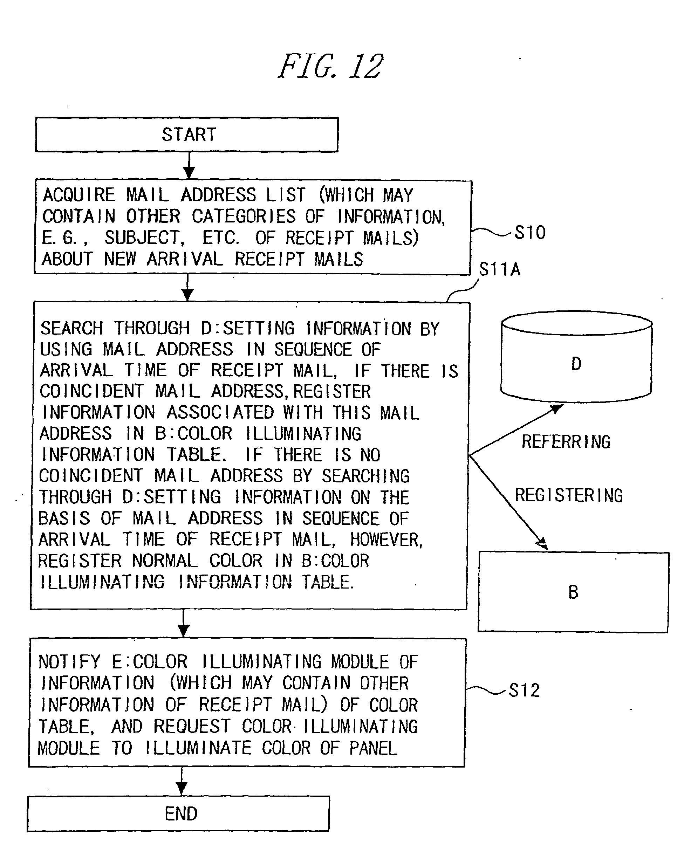

FIG. 12 is a flowchart of processing steps for color-illuminating the liquid crystal panel of the sub-display unit 5 in the sequence of the mail arrive time. This process is actualized as the color illuminating information table creation module 54 executed by the CPU 31. This process is substantially the same as the process in FIG. 10 except step S11A.

To start with, the CPU 31 acquires a mail address list (which may include other categories of information of the receipt mail such as a subject and so on) about newly-arrived receipt mails from the E-mail reading program via the arrival information acquisition interface 50. The CPU 31 may also, however, set not only the newly-arrived receipt mail but also a not-yet-read E-mail as an acquisition target (S10).

Next, the CPU 31 searches through the setting information 53 on the basis of the mail address in the sequence of the arrival time of the receipt mail. Then, if there is a mail address coincident therewith, the CPU 31 registers the color illuminating information table 55 with information associated with that mail address. Whereas if there is no mail address coincident therewith as a result of searching through the setting information 55 on the basis of the mail address in the sequence of the arrival time of the receipt mail, the CPU 31 registers a normal color in the color illuminating information table 55. The CPU 31 repeats such a process about all the receipt mails (S11A).

Then, the CPU 31 notifies the color illuminating module 56 of the information (which may contain other categories of information of the receipt mail) in the color illuminating information table 55, and requests the color illuminating module 56 for the color illumination of the liquid crystal panel (S12).

Thus, the color illuminating information table 55 is created in the sequence of the mail arrival time simply by changing the color illuminating information table creation module 54, whereby the color illuminating sequence can be changed.

### <Other Modified Examples>

According to the first embodiment discussed above, the power source MPU 39 and the backlight controller 48 constitute the color illuminating module 56 in FIG. 1. The color illuminating module 56 is not limited to this construction. For instance, the power source MPU 39 and the backlight controller 48 are made integral to constitute the color illuminating module 56.

Moreover, the color illuminating module 56 itself may be an application program (the software 32) executed on the CPU 31. A scheme in this case may be such that the color illuminating module 56 generates a command for controlling the backlight controller 48 and issues this command to the ASIC register 35.

According to the first embodiment discussed above, the sub-display unit 5 of the information device involves using the liquid crystal panel, and the user is notified of the sender of the E-mail by the color of the illumination via the backlight. The embodiment of the present invention is not, however, restricted to this configuration. For example, the sub-display unit 5 may involve the use of an electroluminescence panel as a substitute for the liquid crystal panel, and the user may also be notified of the sender by the color illumination of the electroluminescence panel. Moreover, the user may also be notified of the sender through a combination of light emitting diodes (LEDs) emitting beams of light assuming a plurality of colors and a lamp.

### <<Second Embodiment>>

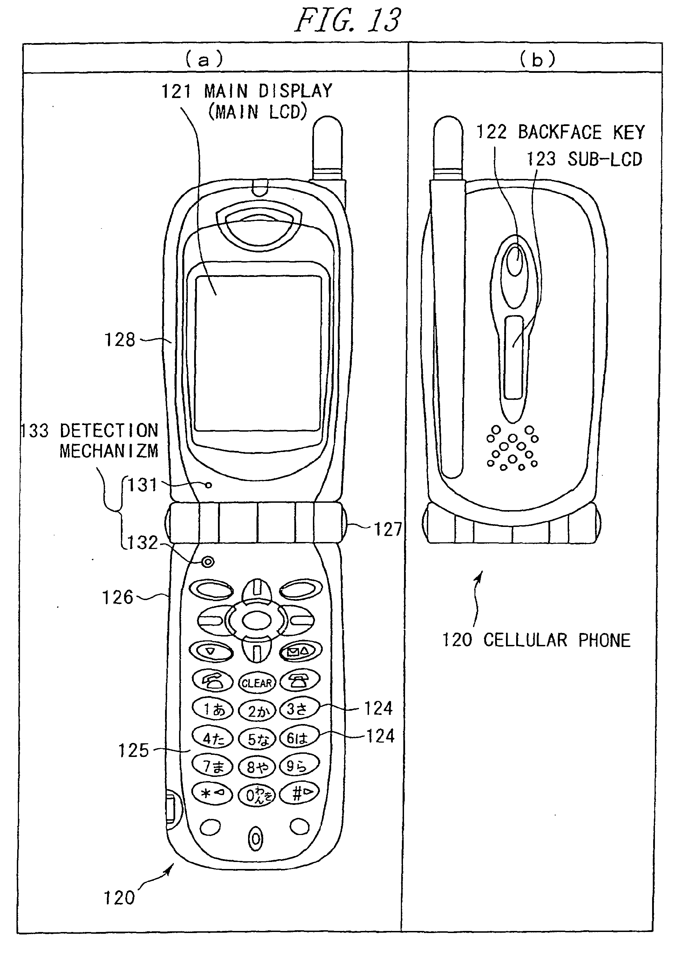

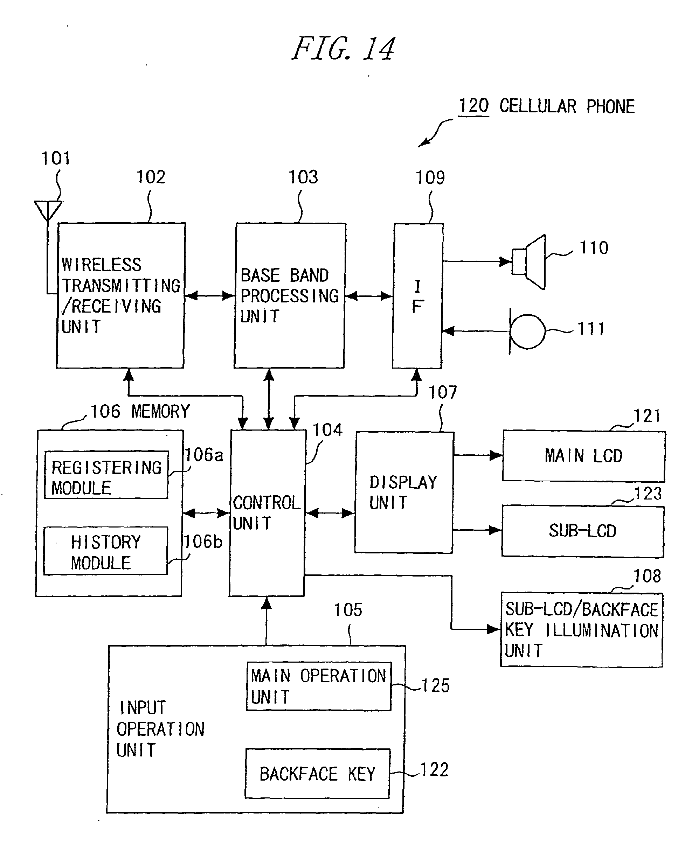

A cellular phone according to a second embodiment of the present invention will hereinafter be explained with reference to the drawings in FIGS. 13 and 14. The discussion on the first embodiment has dealt with the information device, wherein the user is made to grasp the individual senders by switching over the color of the illumination via the backlight of the liquid crystal panel when the plurality of E-mails are reached. The embodiment of the present invention is not, however, limited to this configuration.

To be specific, the present invention is applicable to a communication terminal (provided with a main display and a sub-display) including a display device performing the functions of the sub-display unit 5 as well as of the main display unit 15. The cellular phone to which the present invention can be applied will hereinafter be described. In the following discussion, the cellular phone provided with the main display and the sub-display will be exemplified by a folding type cellular phone having a sub-LCD and a backface key that are provided on the back surface.

### <Configuration>

FIG. 13 is a view showing one example of an external configuration of a folding type cellular phone 120. FIG. 13(a) is the external configuration view showing a state where the cellular phone 120 is expanded. FIG. 13(b) is the external configuration view showing a state where the cellular phone 120 is folded.

The cellular phone 120 includes an operation unit section 126 in which a main operation unit 125 having a plurality of key buttons 124 is built up, and a display unit section 128 so provided as to be turnable (foldable) about a hinged support member 127 provided at one side end of the operation unit section 126, wherein a main display (main LCD) 121 is built up. Then, in an expanded state of the cellular phone 120, the operation unit 125 and the main LCD 121 get operable and visually recognizable as well. Further, a structure in a folded-and-closed state of the cellular phone 120 is that the cellular phone 120 is closed in a compact type so that the operation unit 125 and the main LCD 121 are shielded from outside.

A detection mechanism 133 serving as a detection means for detecting the expanded/folded state of the cellular phone 120, is provided in the vicinity of the hinged support member 127. The detection mechanism 133 is constructed of a press portion 131 protruding from the surface of a box body of the display unit section 128, and of a press switch 134 provided in a recessed portion 132 formed in the surface of the box body of the operation unit section 126 and switched ON (the folded state) upon being pressed by the press portion 131.

As shown in FIG. 13(b), the backface key 122 defined as an operation button and a sub-display (sub-LCD) 123 are provided in close proximity of each other on the back surface of the main LCD 121.

The backface key 122 is used for indicating a variety of operation states in a way that controls the key 122 to be lighted or flickered, and is used for switching over the display on the sub-LCD 123. Further, the backface key 122 may be continuously pressed for a predetermined period of time, thereby the new arrival mails may be checked through the mail server and, when the new arrival mails exist, these mails may be downloaded.

The sub-LCD 123 is employed for displaying the variety of states and information by operating the backface key 122. For instance, a date/time, mail arrival information, a URL list, arrival voice information, etc. are displayed in a switchover manner on the sub-LCD 123.

For example, the main LCD 121 has specifications of being capable of displaying ten full-size characters crosswise in ten lines lengthwise, while the sub-LCD 123 has specifications being capable of displaying six full-size characters.

FIG. 14 is a block diagram simply showing one example of a hardware architecture of the cellular phone 120. Connected to a control unit 104 in the cellular phone 120 shown in FIG. 14 are a wireless transmitting/receiving unit 102 provided with an antenna 101, a base band processing unit 103, an input operation unit 105 used for the user to input a telephone number and information by the key operation, a memory 106 having a registering module 106a and a history module 106b, a display unit 107, the sub-LCD 123, and a backface key illumination unit 108. Further, a loudspeaker 110 and a microphone 111 are connected via an interface (IF) 109 to the control unit 4.

The control unit 104 is constructed of, e.g., an MPU and executes operation control of the present information device according to a program.

The input operation unit 105 includes the backface key 122 in addition to the variety of keys provided on the main operation unit 125.

The display control unit 107 is connected to the main LCD 121 and the sub-LCD 123 shown in FIG. 13, and controls the display on each of the LCD 121 and the LCD 123.

The memory 106 is stored with a program for controlling the operations of the present information device such as voice communications and data communications, etc. and also stored with a program for executing the processes according to the present invention.

Moreover, the registering module 106a on the memory 106 is registered with telephone directory data consisting of a name, reading, a telephone number, a mail address and a residence address, a URL list, mail data of E-mail-function-based receipt mails and creation mails, a verbal message memo, downloaded application programs, various categories of setting information of the cellular phone, and so forth.

The history module 106b on the memory 106 is stored with history information of a voice transmission history, a voice receipt history, etc..

### <Operation>

Based on what has been described above, when the E-mails are reached from the plurality of senders, a mail sender table is created. The mail sender table can be stored with pieces of information on the plurality of E-mail senders and stored with the information about the senders of all the E-mails arrived.

Next, the sub-LCD control unit included in the control unit 104 applies, to a sub-LCD/backface key illumination unit 108, the colors of the illumination via the backlight that are associated with the E-mail senders sequentially from the head of the mail sender table. After being applied, there is a wait for a period of n-sec. This process is the same as in FIG. 11 according to the first embodiment.

Through the operation described above, when the E-mails of the plurlaity of senders arrive, it follows that the colors of the sub-LCD 123, which are associated with the individual senders, are sequentially illuminated by the backlight at an interval of n-sec. Those illuminated colors enable the user, even when the plurality of E-mails have arrived, to recognize which senders sent these mails.

### <<Modified Examples>>

The discussion on the first embodiment of the second embodiment discussed above has dealt with the Personal Data Assistants or the cellular phone, in which when the plurality of E-mails arrive, the user is notified of the individual senders by changing the color of the illumination via the backlight of the liquid crystal panel. An object of the embodiment of the present invention is not, however, limited to the process described above.

For instance, the following functions may be provided by changing the color illuminating information table creation module 54 in the first embodiment and the "mail sender table creation process" in the second embodiment.
1) There may be a change of illuminating plural colors with the backlight of the sub-display unit 5 in the first embodiment and also plural LCD colors on the cellular phone such that the colors are illuminated according to the order of the importance of the each E-mail.
2) As for an absent-time arrival which is recorded on the memory of the cellular phone when over a predetermined period for which the cellular phone keeps receiving a call, for example, when a calling count of a calling sound exceeds a predetermined calling count, the user may be made to intuitively recognize it by changing the color illumination on the main LCD 121 and on the sub-LCD 123 in the same way as the above.
3) With respect to the information received by an answering machine of a fixed telephone, similarly the user may be made to intuitively recognize this receipt information by changing the color illumination on the main LCD 121 and on the sub-LCD 123.
4) The embodiments discussed above have exemplified the notification by the color illumination. As substitutes for this color illumination, however, the user may be notified of the individual senders by changing a vibration pattern, an arrival tone/arrival melody by use of other notifying means such as a vibration notification using a vibrator provided on the device, an arrival sound/arrival melody, and so forth. Namely, the embodiment of the present invention is not restricted by the notifying means and may involve using any types of notifying means.

### <<Examples of Networks>>

The embodiment of the present invention is not restricted by a type of the network across which the information device receives the E-mail. For example, this network may utilize any one of cable communication mediums such as metallic cables including a coaxial cable and a twisted pair cable, optical communication cables, or wireless communication mediums such as satellite communications, ground wave wireless communications, wireless communications such as wireless LAN, Bluetooth, etc..

Further, signals on such a network may be carried on electromagnetic waves, the light and so on, and may take a base band waveform with no carrier wave.

### <<Readable-by-Computer Recording Medium>>

A program for making a computer actualize any one of the functions described above can be recorded on a readable-by-computer recording medium. Then, the computer is made to read and execute the program on this recording medium, whereby the functions thereof can be provided.

The readable-by-computer recording medium herein connotes recording mediums capable of storing information such as data, programs, etc. electrically, magnetically, optically and mechanically or by chemical action, which can be read by the computer. Among those recording mediums, the mediums demountable from the computer are, e.g., a floppy disk, a magneto-optic disk, a CD-ROM, a CD-R/W, a DVD, a DAT, an 8mm tape, a memory card, etc..

Further, the recording mediums fixed within the computer are exemplified such as a hard disk, a ROM (Read Only Memory) and so on.

### <<Data Communication Signals Embodied in Carrier Waves>>

Furthermore, the above program can be stored on the hard disk and the memory of the computer, and downloaded to other computers via the communication mediums. In this case, the program is transmitted as data communication signals embodied on carrier waves via the communication mediums. Then, the aforementioned functions can be provided by the computer downloaded with this program.

Herein, the communication mediums may be any one of cable communication mediums such as metallic cables including a coaxial cable and a twisted pair cable, optical communication cables, or wireless communication mediums such as satellite communications, ground wave wireless communications, etc..

Moreover, the carrier waves are electromagnetic waves for modulating the data communication signals, or the light. The carrier waves may, however, be DC signals. In this case, the data communication signal takes a base band waveform with no carrier wave. Accordingly, the data communication signal embodied on the carrier wave may be any one of a modulated broadband signal and an unmodulated base band signal (corresponding to a case of setting a DC signal having a voltage of 0 as a carrier wave).

### <<Effects of the Invention>>

From the above-mentioned, even when simultaneously receiving the plurality of E-mails and the absent-time arrivals, the user is able to easily recognize the contents thereof from the colors of the illumination via the backlight of the liquid crystal panel and from the lamp colors.

### Industrial Applicability

The present invention can be utilized for a communication service industry of providing telephone lines and broadband networks and for an industry of manufacturing the information devices used in those communications.

## Claims

1. A control system of an information device, comprising:
a detection unit detecting an arrival of information from said information device performing communications via a network;
a recording unit recording a category of the information and a mode of an arrival notification associated with this category;
a driving unit driving an output device notifying of the arrival of the information, corresponding to the mode associated with the information category; and
a control unit controlling, when said detection unit detects a plurality of arrivals at one detection timing, said driving unit in a predetermined procedure with respect to the plurality of arrivals.

2. A control system of an information device according to claim 1, wherein a priority is set in the category of the information, and
said control unit determines a notifying sequence of notifying of the plurality of arrivals on the basis of the priority, and controls said driving unit.

3. A control system of an information device according to claim 1, wherein said control unit determines the notifying sequence of notifying of the plurality of arrivals on the basis of the sequence of the plurality of arrivals, and controls said driving unit.

4. An information device comprising:
a detection unit for detecting an arrival of information via a network;
a recording unit recording a category of the information and a mode of an arrival notification associated with this category;
an output device notifying of the information arrival;
a driving unit driving said output device corresponding to the category of the arrived information; and
a control unit controlling, when said detection unit detects a plurality of arrivals at one detection timing, said driving unit in a predetermined procedure with respect to the plurality of arrivals.

5. An information device according to claim 4, wherein a priority is set in the category of the information, and
said control unit determines a notifying sequence of notifying of the plurality of arrivals on the basis of the priority, and controls said driving unit.

6. An information device according to claim 4, wherein said control unit determines the notifying sequence of notifying of the plurality of arrivals on the basis of the sequence of the plurality of arrivals, and controls said driving unit.

7. A control method of an information device, comprising steps of:
detecting an arrival of information from said information device performing communications via a network;
referring to a category of the arrived information and a mode of an arrival notification associated with this category;
driving an output device for notifying of the arrival of the information, corresponding to the mode associated with the information category; and
starting, when a plurality of arrivals are detected at one detection timing in said detection step, said driving step in a predetermined procedure with respect to the plurality of arrivals.

8. A control method of an information device according to claim 7, wherein a priority is set in the category of the information, and
said starting step includes determining a notifying sequence of notifying of the plurality of arrivals on the basis of the priority, and starting said driving step.

9. A control method of an information device according to claim 7, wherein start step involves determining the notifying sequence of notifying of the plurality of arrivals on the basis of the sequence of the plurality of arrivals, and starting said driving step.

10. A program for making a computer execute steps of:
detecting an arrival of information from an information device performing communications via a network;
referring to a category of the arrived information and a mode of an arrival notification associated with this category;
driving an output device for notifying of the arrival of the information, corresponding to the mode associated with the information category; and
starting, when a plurality of arrivals are detected at one detection timing in said detection step, said driving step in a predetermined procedure with respect to the plurality of arrivals.

11. A program according to claim 10, wherein a priority is set in the category of the information, and
said starting step includes determining a notifying sequence of notifying of the plurality of arrivals on the basis of the priority, and starting said driving step.

12. A program according to claim 10, wherein starting step involves determining the notifying sequence of notifying of the plurality of arrivals on the basis of the sequence of the plurality of arrivals, and starting said driving step.

13. A readable-by-computer recording medium recorded with a program for making a computer execute steps of:
detecting an arrival of information from an information device performing communications via a network;
referring to a category of the arrived information and a mode of an arrival notification associated with this category;
driving an output device for notifying of the arrival of the information, corresponding to the mode associated with the information category; and
starting, when a plurality of arrivals are detected at one detection timing in said detection step, said driving step in a predetermined procedure with respect to the plurality of arrivals.
